# EUROPEAN PATENT SPECIFICATION

(11) **EP 3 110 765 B1**
(45) Date of publication and mention of the grant of the patent: **28.11.2018**
(21) Application number: 15708859.2
(22) Date of filing: 25.02.2015
(51) Int. Cl.: C02F 9/00, C02F 1/52, C02F 1/66, C01F 7/06, C02F 1/38, C02F 1/24, C02F 11/12, C02F 11/14, C02F 101/10, C02F 103/10

(54) **METHOD OF REMOVING SULPHATE FROM WASTE WATER**
VERFAHREN ZUR ENTFERNUNG VON SULFAT AUS ABWASSER
PROCÉDÉ D'ÉLIMINATION DU SULFATE À PARTIR D'EAUX USÉES

(30) Priority: 26.02.2014 FI 20145183
(43) Date of publication of application: 04.01.2017
(73) Proprietor: Outotec (Finland) Oy, 02230 Espoo (FI)
(72) Inventor: MARTIKAINEN, Mika, FI-02200 Espoo (FI)
(74) Representative: Kolster Oy Ab
(86) International application number: PCT/FI2015/050108
(87) International publication number: WO 2015/128541

(56) References cited:
- WO-A1-98/55405
- WO-A1-2014/033361
- DE-A1- 3 709 950
- JP-A- 2005 008 492
- US-A- 1 620 332
- US-A- 2 159 843
- "Design Manual: Neutralization of Acid Mine Drainage", EPA-600/2-83-001, 1 January 1983 (1983-01-01), XP055126699, Retrieved from the Internet: URL:n.a. [retrieved on 2014-07-03]
- DATABASE WPI Week 198044 Thomson Scientific, London, GB; AN 1980-78481C XP002739435, & SU 722 845 A (POEZD N P) 26 March 1980 (1980-03-26)
- Anonymous: "Sodium aluminate - Wikipedia", , 16 November 2017 (2017-11-16), XP055425610, Retrieved from the Internet: URL:https://en.wikipedia.org/wiki/Sodium_a luminate [retrieved on 2017-11-16]
- G. Barger ET AL: "Ettringite Formation and the Performance of Concrete", , 31 December 2001 (2001-12-31), XP055425666, Retrieved from the Internet: URL:http://www.cement.org/docs/default-sou rce/fc_concrete_technology/is417-ettringit e-formation-and-the-performance-of-concret e.pdf [retrieved on 2017-11-16]

## Description

### FIELD OF THE INVENTION

The present invention relates to a method of removing sulphate, calcium and other soluble metals from sulphate-containing waste water, and more particularly to a method of removing sulphate, calcium and other soluble metals from waste water by using sodium aluminate.

### BACKGROUND OF THE INVENTION

Sodium aluminate chemical is needed in a so-called ettringite precipitation process, which is used for sulphate and calcium removal from water, especially from mining industry waste waters. Ettringite precipitation process is an efficient way of removing sulphate from waste waters to levels much lower than can be achieved with traditional gypsum precipitation processes. However, sodium aluminate can be expensive and not always readily available in all locations where needed.

Publication WO 98/55405 discloses a process for removing sulphates and calcium from a water stream which comprises the steps of combining the water stream and an amount of amorphous aluminium trihydroxide (Al(OH)₃); allowing the formation of ettringite as a precipitate and removing the precipitated ettringite from the water stream. The water stream may also be combined with both an amount of aluminium hydroxide and an amount of lime (CaO). The process may include a desupersaturating step, which may involve passing the water stream through a high solids precipitator to cause precipitation of calcium sulphate on gypsum seen in the form of calcium sulphate dihydrate (gypsum). The process may also include a post treatment step of adding carbon dioxide to the water stream to precipitate dissolved lime as calcium carbonate and to reduce the pH of the water stream.

Publication DE 37 09 950 discloses a method for separating sulphate ions from waste waters through precipitating poorly soluble calcium aluminate sulphates with aluminate ions in the presence of calcium ions. The source for aluminate ions is sodium aluminate or material containing sodium aluminate. In addition to sodium aluminate or the material containing sodium aluminate also lime is added. Thereby can Ca(OH)₂ and CaO be used. Although publication DE 37 09 950 discloses that sodium aluminate may be prepared by using Al(OH)₂ and sodium hydroxide, it is silent about any suitable parameters of the method and their possible effect on the precipitation method of ettringite.

Publication "Design Manual: Neutralization of Acid Mine Drainage", EPA-600/2-83-001 describes a process for treating waste water having a high sulphate content through precipitation of insoluble calcium sulfoaluminates.

### BRIEF DESCRIPTION OF THE INVENTION

An object of the present invention is thus to provide a method so as to alleviate the above disadvantages. The objects of the invention are achieved by a method, which is characterized by what is stated in the independent claim 1. The preferred embodiments of the invention are disclosed in the dependent claims.

The invention is based on the idea of producing sodium aluminate on-site and utilizing it in a sulphate removal process. More specifically, the invention is based on the idea of producing sodium aluminate on-site by using a specific combination of process parameters and utilizing the thus obtained sodium aluminate in the sulphate removal process thereafter.

Sodium aluminate is an expensive and not necessarily easily available chemical in all locations where needed for the ettringite precipitation process. However, raw materials for sodium aluminate, NaOH and Al(OH)₃ are readily available and less expensive. The preparation of sodium aluminate on-site results in a smaller carbon foot print as there is no longer need to transfer rather diluted solution of sodium aluminate.

The present invention relates to a method of removing sulphate, calcium and other soluble metals from sulphate-containing waste water. The method comprises the following steps
a) on-site a sodium aluminate preparation step, wherein NaOH and Al(OH)₃ are contacted at a temperature of 90°C-180°C and the molar ratio NaOH:Al(OH)₃ 1.2-2.0, for preparing sodium aluminate,
b) an ettringite precipitation step, wherein the waste water is contacted with the on-site obtained sodium aluminate and a first calcium compound within 7 days of preparation of the on-site obtained sodium aluminate for producing a sludge containing ettringite,
c) a first separation step, wherein a solid-liquid separation is performed for the sludge containing ettringite for separating solids from the liquid thereby producing a first solution,
d) a neutralisation step, wherein the first solution is contacted with a carbonating agent for neutralising the first solution and precipitating calcium contained in the first solution as calcium carbonate, and
e) a second separation step wherein a solid-liquid separation is performed for separating precipitated calcium carbonate from the first solution in order to obtain water having a reduced sulphate, calcium and other soluble metals content.

A further advantage of the method of the invention is that when the sodium aluminate prepared according to the present invention is used significantly lower sulphate content in the waste water is achieved with a smaller amount of precipitation chemicals. The stabilizing agents necessary to be present in commercially available sodium aluminates seem to interfere with the ettringite precipitation reaction thereby resulting in a lower sulphate removal rate. With the present invention and the process parameters used in the sodium aluminate preparation method the reactivity of the sodium aluminate is at an excellent level.

Another advantage of the present invention is that when the sodium aluminate is produced in the conditions of the present invention a minimum amount of residual Al(OH)₃ remains in the sodium aluminate solution after the preparation reaction. This means that there is higher concentration of soluble aluminium in the sodium aluminate.

It was also surprisingly found out that with the present invention the amount of soluble aluminium and sodium in the filtrate coming from ettringite process can be minimized. It was also surprisingly found out that the unreacted Al(OH)₃ in the sodium aluminate solution does not have a negative effect within the ettringite precipitation step nor does it further react to ettringite salt as would have been expected by a person skilled in the art. Thus a simple process was found, where no filtration is needed for removing unreacted solid matter after the formation of sodium aluminate and before its utilisation in the ettringite precipitation step.

### BRIEF DESCRIPTION OF THE DRAWINGS

In the following the invention will be described in greater detail by means of preferred embodiments with reference to the attached drawings, in which
Figure 1 is an example embodiment of the present invention;
Figure 2 is a contour plot of the residual solids [g/l] after reaction as a function of reaction temperature and NaOH:Al(OH)₃-molar ratio;
Figure 3 is a diagram showing the amount of the residual sulphate after 15 min reaction time as a function of the Al/SO₄-molar ratio;
Figure 4 is a diagram showing the amount of the residual sulphate after 30 min reaction time as a function of the Al/SO₄-molar ratio;
Figure 5 is a diagram showing the amount of the residual sulphate after 60 min reaction time as a function of the Al/SO₄-molar ratio;
Figure 6 is a diagram showing residual Al after 30 min reaction time as a function of the Al/Initial SO₄-molar ratio;
Figure 7 is a diagram showing Residual Na after 30 min reaction time as a function of the Al/Initial SO₄-molar ratio.

### DETAILED DESCRIPTION OF THE INVENTION

The present invention relates to a method for treating waste water, especially by separating sulphate, calcium and other soluble metals from the sulphate-containing waste water. The method comprises the following steps
a) an on-site sodium aluminate preparation step, wherein NaOH and Al(OH)₃ are contacted at a temperature of 90ºC-180ºC and the molar ratio NaOH:Al(OH)₃ 1.2-2.0, for preparing sodium aluminate,
b) an ettringite precipitation step, wherein the waste water is contacted with the on-site obtained sodium aluminate and a first calcium compound within 7 days of preparation of the on-site obtained sodium aluminate for producing a sludge containing ettringite,
c) a first separation step, wherein a solid-liquid separation is performed for the sludge containing ettringite for separating solids from the liquid thereby producing a first solution,
d) a neutralisation step, wherein the first solution is contacted with a carbonating agent for neutralising the first solution and precipitating calcium contained in the first solution as calcium carbonate, and
e) a second separation step wherein a solid-liquid separation is performed for separating precipitated calcium carbonate from the first solution in order to obtain water having a reduced sulphate, calcium and other soluble metals content.

The present method is based on the idea of preparing sodium aluminate on-site and using it in an ettringite precipitation method. The process parameters used in the sodium aluminate preparation step have an advantageous effect on the properties of the prepared sodium aluminate and thereby also on the outcome of the ettringite precipitation process.

The waste water is any water from which it is desired to remove sulphate, typically sulphate, calcium and other soluble metals. Typically the waste water is sulphate-containing water. More typically the waste water is process water, effluent or sulphate-containing water, such as mine water, recycle water from concentrator or discharge water from concentrator.

The method of the present invention is especially suitable for treating the waste waters from concentrators, where sulphate is a problem in recycle or discharge streams. The specific problem in concentrator's plant waters is the simultaneous high sulphate and calcium load, making the configuration of the present invention feasible.

In the sodium aluminate preparation step NaOH and Al(OH)₃ are contacted at a temperature of at least 90°C and the molar ratio NaOH:Al(OH)₃ at least 1.2, for preparing sodium aluminate. NaOH is typically used as liquid and Al(OH)₃ is typically in the form of powder. These two reagents are typically contacted in a reactor, typically in a reactor which can be heated and which comprises means for mixing, such as a mechanical mixer.

The temperature of the reaction is maintained in at least 90°C, more typically at least 95°C.The molar ratio of NaOH:Al(OH)₃ is maintained in a value of
at least 1.2, more typically at least 1.25. The upper limit of the molar ratio is typically at most 2.0, more typically at most 1.5. Typically the temperature of the reaction is in the range of 90-180ºC, more typically in the range of 90-105ºC even more typically 95-105°C. The molar ratio of NaOH:Al(OH)₃ is typically in the range of 1.2-2.0, more typically in the range of 1.2-1.5, even more typically 1.2-1.40, yet more typically 1.25-1.4. It was surprisingly found out, that if the temperature of the reaction is maintained in at least 90°C, more typically at least 95°C and the molar ratio of NaOH:Al(OH)₃ is maintained in a value of at least 1.2, more typically at least 1.25, the amount of residual solids remaining after the reaction is decreased significantly. However, it was also found out that the sodium content in the treated water obtained after the ettringite precipitation rises to undesirably high levels if the used molar ratio is more than 2.0, typically more than 1.5. It was also surprisingly found out that when the sodium aluminate was prepared in the conditions wherein the temperature of the reaction is maintained in at least 90°C, more typically at least 95°C and the molar ratio of NaOH:Al(OH)₃ is maintained in a value of at least 1.2, more typically in at least 1.25, the amount of sulphate in the treated water was significantly lower compared to if commercially available sodium aluminate were used.

According to the invention the temperature in the sodium aluminate preparation step is maintained in at least 90°C and the molar ratio of NaOH:Al(OH)₃ is maintained in a value of at least 1.2, typically the temperature is maintained in at least 95°C and the molar ratio of NaOH:Al(OH)₃ is maintained in a value of at least 1.25.

According to an embodiment of the invention the temperature in the sodium aluminate preparation step is maintained in the range of 90-180ºC and the molar ratio of NaOH:Al(OH)₃ is in the range of 1.2-2.0, typically in the range of 1.2-1.5, more typically the temperature is in the range of 90-105°C and the molar ratio of NaOH:Al(OH)₃ is in the range of 1.2-1.4, yet more typically the temperature is in the range of 95-105°C and the molar ratio of NaOH:Al(OH)₃ is in the range of 1.25-1.40.

Typically heat is provided to the sodium aluminate preparation step in any suitable way known in the art.

When the sodium aluminate is prepared according to the present invention the amount of unreacted Al(OH)₃ is typically less than 10% in the sodium aluminate solution. More typically, when the temperature of the sodium aluminate reaction is at least 95°C and the molar ratio of NaOH:Al(OH)₃ is at least 1.25 the amount of unreacted Al(OH)₃ is typically as low as less than 3.5%. Even though the sodium aluminate contains some unreacted Al(OH)₃ it was surprisingly found out that this does not affect the ettringite precipitation reaction in the subsequent step. Thus, no separate filtering step is needed before the sodium aluminate solution can be fed to the ettringite precipitation step.

The retention time of the sodium aluminate preparation step is typically 15 min to 120 min, typically 30 to 90 min.

A further advantage achieved by the method of the present invention is that in the preparation of the sodium aluminate the amount of sodium used can be easily controlled, thus the sodium aluminate can be prepared by using the lowest possible amount of sodium needed in the reaction.

After the preparation of the sodium aluminate it can either be directly used in the ettringite precipitation step or optionally it can be stored in any suitable way up to 7 days. Typically the sodium aluminate is stored less than 24 hours before used in the ettringite precipitation step. If the prepared sodium aluminate is used in the ettringite precipitation step within 7 days of its preparation the reactivity of the sodium aluminate is still at a suitable level. After that aluminum hydroxide starts to precipitate out of the sodium aluminate solution thus lowering the results of the ettringite precipitation reaction in the ettringite precipitation step.

After the preparation of the sodium aluminate, and the optional storing, the sodium aluminate solution is diluted to a suitable concentration. The dilution is typically performed by adding water to the sodium aluminate solution. Typically the sodium aluminate solution used in the ettringite precipitation step comprises 10 to 12.5 weight-% aluminum, more typically 10.5 to 12.0 weight-%.

In the ettringite precipitation step the residual sulphate contained in the sludge is precipitated with sodium aluminate, as presented above, to a desired level. The lowest achievable levels are 10 mg/l of sulphate. It will also be possible to precipitate other sulphates, such as potassium and sodium sulphates, from the water in the ettringite precipitation step. Sulphate is precipitated as ettringite by adding the obtained sodium aluminate and calcium compound, typically at pH from 10.5 to 12.5.

Ettringite is precipitated according to the following equation:

2Al³⁺+6Ca²⁺+3SO₄²⁻+34H₂O -> Ca₆Al₂(SO₄)₃(OH)₁₂*26H₂O + 4H⁺ (1)

According to an embodiment of the invention the retention time in the ettringite precipitation step is typically from 10 to 60 minutes, more typically from 15 to 30 minutes.

According to an embodiment of the invention in the ettringite precipitation step the molar ratio of Al³⁺/SO₄²⁻ is typically approximately from 2:3 to 1:1.

According to an embodiment of the invention the solid-liquid separation is performed by settling, filtering, clarification, decanting, by using hydrocyclone and/or by using Dissolved Air Flotation. The clarifier may be for example a conventional round clarifier with an optimized feed well design or a lamella type of clarifier. The filter is typically selected from the range of filter presses (vertical or horizontal filter presses), but also belt filters may come into question.

The composition of the solids depends on the composition of the feed water. According to an embodiment of the invention the solids separated in the first separation step comprise ettringite, optionally gypsum and optionally calcium carbonate, metal hydroxides and other inert components present in the feed materials to the method. The presence of gypsum in the solids separated in the first separation step depends on whether an additional gypsum removal step has been present. The solids formed in the gypsum precipitation step comprise typically metals as hydroxides, such as heavy metals as hydroxides and gypsum. For example copper and other soluble metals present in the feed precipitate typically as corresponding hydroxides already at the gypsum precipitation step. The solids separated in the first separation step may be landfilled. The gypsum and ettringite solids are advantageously piled in a single stacking area as gypsum functions as a stabilising compound for ettringite.

According to an embodiment of the invention a part of or all of the solids separated in the first separation step are recycled back to an optional gypsum precipitation step and/or to the ettringite precipitation step. The recycling of the underflow, i.e. the solids from the first separation step is so called seed recycling. By doing this the particle size of the precipitate is made larger and this provides a sludge which is easier to settle, in other words sludge from which it is easier to separate the solids.

In the neutralisation step the first solution is contacted with a carbonating agent for neutralising the first solution and precipitating calcium contained in the first solution as calcium carbonate. Typically the carbonating agent is any suitable carbonating agent, such as CO₂, sodium carbonate or sodium bicarbonate. More typically the carbonating agent is CO₂. The neutralisation step is typically performed by decreasing the pH and precipitating calcium as calcium carbonate (CaCO₃) by adding CO₂ to the first solution. If the calcium concentration (Ca-hardness) needs to be lowered further a sodium hydroxide (NaOH), or other alkaline stream may be added to the process step thereby allowing further removal of Ca as CaCO₃ by adding alkalinity and avoiding the pH to decrease to the unfavourable area for CaCO₃ precipitation, below pH 8 to 9. The retention time in the neutralisation step is typically from 5 to 15 minutes.

According to an embodiment of the invention in the neutralisation step the first solution is contacted with an alkaline, such as sodium hydroxide, for increasing the precipitation of calcium as calcium carbonate. The carbon dioxide is used for both neutralising the solution and for removing the calcium hardness from the solution. The neutralisation and calcium precipitation reactions for CO₂ neutralisation may be summarized by the following equations:

CO₂ + H₂O -> CO₃²⁻ + 2 H⁺ (2)

CO₃²⁻ + Ca²⁺ -> CaCO₃ (3)

H⁺ + OH⁻ -> H₂O (4)

The ettringite and optional gypsum are separated before the neutralisation step, as the lowering of the pH increases the solubility of the precipitated ettringite. It is possible to recycle the calcium carbonate solids to the beginning of the process to be used as neutralising agent to acidic waste waters to be processed. Calcium carbonate may also be used for producing alkaline buffering capacity for the gypsum and ettringite residues.

The second separation step may be performed by solid-liquid separation, for example as stated above.

The calcium content of the waste water is reduced to a desired level. Examples of calcium content in the waste water can be below 10 mg/l.

Before the sodium aluminate preparation step and/or the ettringite precipitation step the method may also comprise an optional gypsum precipitation step, wherein the waste water is contacted with a calcium compound for producing a sludge containing gypsum. Optionally the formed gypsum may be removed from the sludge before feeding to the ettringite precipitation step.

According to an embodiment of the invention the calcium compound used in the gypsum precipitation step and/or in the ettringite precipitation step are selected independently from the group consisting of calcium hydroxide, calcium oxide, calcium carbonate and any mixtures thereof.

Typically the calcium compound in the gypsum precipitation step is calcium hydroxide, which allows the removal of soluble sulphates depending on the pH-dependent solubilities of the counter-cations, especially K, Na and Ca, of the soluble sulphate species. Sulphate and metal impurities from the solution will typically precipitate according to the following equation:

SO₄²⁻+Ca(OH)₂+Me⁺/Me²⁺/Me³⁺->MeOH/Me(OH)₂/Me(OH)₃+CaSO₄ (5)

wherein Me is a metal.

According to an embodiment of the invention the ettringite precipitation step may be performed in the sludge containing gypsum, i.e. without an optional gypsum removal step. Ettringite has a tendency to dissolve at a pH below 10. According to an embodiment of the invention the gypsum content in the sludge may stabilize the solids and prevent the leaching of ettringite during landfilling, for which reason it is sometimes feasible to carry out the ettringite precipitation in gypsum-containing sludge. An advantage of this is that a precipitate which settles more easily is achieved and additionally forms a more compact and low moisture precipitate during filtration.

The method of the present invention can be carried out in an apparatus for removing sulphate, more typically for removing sulphate, calcium and/or other soluble metals from waste water, which apparatus comprises:
a) a sodium aluminate preparation unit, which is adapted for preparing sodium aluminate by contacting NaOH and Al(OH)₃ at a temperature of 90-180ºC and the molar ratio NaOH:Al(OH)₃ 1.2-2.0,
b) an ettringite precipitation unit, which is adapted for producing a sludge containing ettringite by contacting the waste water with the obtained sodium aluminate and a first calcium compound,
c) a first separation unit, which is adapted for producing a first solution by performing a solid-liquid separation for the sludge containing ettringite by separating solids from the liquid,
d) a neutralisation unit, which is adapted for neutralising the first solution by contacting the first solution with a carbonating agent and thereby precipitating calcium contained in the first solution as calcium carbonate, and
e) a second separation unit, which is adapted for performing a solid-liquid separation by separating precipitated calcium carbonate from the first solution and thereby obtaining water having a reduced sulphate, calcium and/or other soluble metals content.

The apparatus comprises means for performing the steps of the method presented above.

The apparatus comprises a storage tank for storing the sodium aluminate before it is used in the ettringite precipitation unit.

The apparatus comprises a gypsum precipitation unit a') prior to the ettringite precipitation unit b), which gypsum precipitation unit is adapted for contacting the waste water with a second calcium compound for precipitating gypsum.

The apparatus comprises optionally a gypsum removal unit a") between the gypsum precipitation unit a') and the ettringite precipitation unit b). The gypsum removal unit is adapted for performing a solid-liquid separation for removing precipitated gypsum from the sludge. Typically the gypsum removal unit is a clarifier. Flocculants are typically used to aid the settling of the precipitates in the clarifier.

Typically the gypsum precipitation unit comprises stirred reactor tank and necessary inlets and outlets for providing and recovering process streams.

Typically the ettringite precipitation unit also comprises stirred reactor tank and necessary inlets and outlets for providing and recovering process streams.

The first and second separation units typically comprise any suitable equipment for separating solids from liquid, such as a settling device, a filter, a clarifier, a lamella clarifier, hydrocyclone, decanter or DAF (Dissolved Air Flotation). One or more of these equipments may be used in any combination if necessary. Typically the separation units comprise a clarifier, such as a conventional round clarifier with an optimized feed well design followed by a filtration unit to further dewater the produced clarifier underflow.

The neutralisation unit comprises typically a carbonation basin or a stirred tank reactor.

### List of reference numbers

- 2: process water
- 4: second calcium compound
- 6: gypsum precipitation step
- 9: first calcium compound
- 10: ettringite precipitation step
- 12: first solid-liquid separation step
- 14: flocculant
- 13: underflow
- 16: filter
- 18: filtrate water
- 20: solid product
- 22: solid recycle
- 24: carbonating agent
- 26: neutralisation step
- 28: second solid-liquid separation
- 30: solid recycle
- 32: treated water
- 100: sodium aluminate preparation step
- 101: sodium hydroxide (NaOH)
- 102: aluminium hydroxide (Al(OH)₃)
- 103: heat

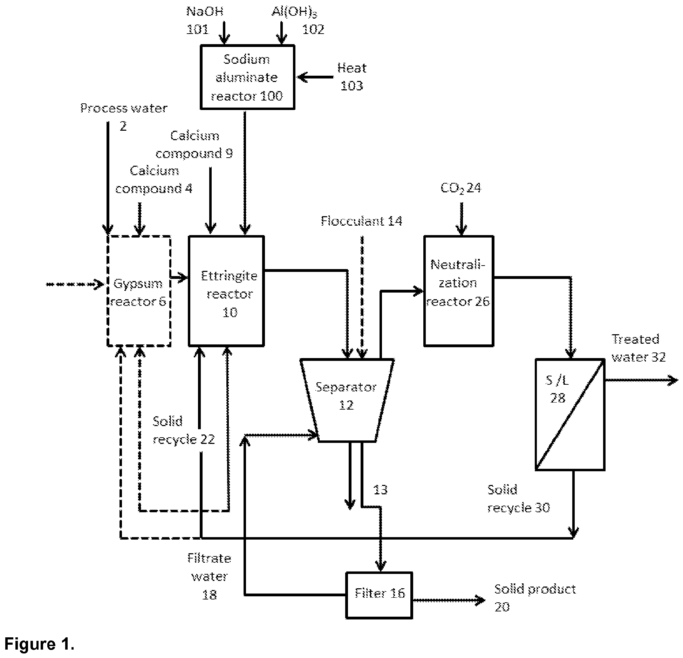

Referring to Figure 1, in the method water to be processed, i.e. process water 2, may optionally be fed to a gypsum precipitation step 6 (shown with dashed line), which typically is a gypsum reactor. If gypsum precipitation step 6 is present, a second calcium compound 4, typically lime milk (calcium hydroxide), is also fed to the gypsum reactor thereby precipitating gypsum. A sludge containing gypsum is formed and the sludge may be fed to an ettringite precipitation step 10, which is typically an ettringite reactor. The formed gypsum may also be removed from the sludge before feeding the water to the ettringite precipitation step. The optional gypsum removal step is not shown in the figure. If gypsum precipitation step is not present the process water 2, i.e. the waste water to be treated is fed directly to the ettringite precipitation step 10.

Sodium hydroxide (NaOH) 101 and aluminium hydroxide (Al(OH)₃) 102 are fed to the sodium aluminate preparation step 100, wherein they are contacted, typically in a heatable reactor comprising means for mixing. Heat 103 is also provided to the sodium aluminate preparation step 100. The temperature of the reactor is kept in at least 90°C and the molar ratio of NaOH:Al(OH)₃ is at least 1.2. Sodium aluminate is formed and either fed directly to the ettringite precipitation step or stored, possibly in a temporary storage tank (not shown in the figure), for up to 7 days.

The formed sodium aluminate and a first calcium compound 9, typically calcium hydroxide, are fed to the ettringite precipitation step 10 thereby producing a second sludge containing ettringite and optionally gypsum if the gypsum precipitation step has been present and the precipitated gypsum has not been separated. The second sludge is subjected to a first solid-liquid separation step 12, which is typically performed by a clarifier. A flocculant 14, may also be fed to the clarifier. From the first solid-liquid separation step 12 the underflow 13 is fed to a filter 16 and/or back to the ettringite precipitation step 10 and/or to the optional gypsum precipitation step 6 as seeds in solid recycle 22. In the filtration step 16 the underflow is filtered thereby producing a solid product 20 containing gypsum, ettringite and soluble metals in precipitated form and filtrate water 18. The filtrate water 18 is conveyed back to the first solid-liquid separation step 12. The overflow from the first solid-liquid separation step 12 is conveyed to a neutralisation step 26, which is typically performed in a neutralisation reactor. Carbonating agent, typically carbon dioxide, 24 is fed to the neutralisation step 26 thereby neutralising the solution and precipitating calcium contained in the solution as calcium carbonate. Further removal of calcium may be achieved by optionally adding an alkaline to the neutralisation step, typically the alkaline is sodium hydroxide. The solution from the neutralisation step is conveyed to a second solid-liquid separation step 28 wherein the precipitated calcium carbonate is separated from the water thereby producing treated water 32. The solids obtained in the second solid-liquid separation step may optionally be conveyed to gypsum precipitation step 6 and used as solid recycle 30 and/or to ettringite precipitation step 10.

### EXAMPLES

### Experiments for Sodium Aluminate preparation

Set of experiments were done in order to investigate the preparation of sodium aluminate. Two main variables, the molar ratio of NaOH:Al(OH)₃ (from 1 to 1.5, where >1 indicates over stoichiometric ratios) and the reaction temperature (from 70 to 120°C), were varied. Due to high boiling point of sodium hydroxide solution, it was possible to do experiments in atmospheric pressure.

**Table 1. Experimental set-up**

| | Na/Al-molar ratio | Al(OH)₃ [g] | Reaction temperature [°C] | Dilution water [g] |
|---|---|---|---|---|
| **EXP 1** | 1.500 | 495 | 120 | 180 |
| **EXP 2** | 1.500 | 495 | 70 | 180 |
| **EXP 3** | 1.250 | 592 | 120 | 364 |
| **EXP 4** | 1.250 | 592 | 95 | 364 |
| **EXP 5** | 1.250 | 592 | 70 | 364 |
| **EXP 6** | 1.000 | 740 | 120 | 646 |
| **EXP 7** | 1.000 | 740 | 70 | 646 |
| **EXP 8** | 1.375 | 540 | 107 | 265 |

### Experiments

Sodium hydroxide (50% solution, technical grade) was first heated up to 50°C. Al(OH)₃ was added.

After dosing the Al(OH)₃ powder, the mixture was heated to reaction temperature indicated in the table 1. Temperatures of 70°C, 95°C, 107°C or 120°C were tested. Mixture was kept at reaction temperature for 60 min.

Mixture was first cooled down to 90°C (in case the reaction temperature was higher than 90°C) and after that the dilution water was added in order to fix the total aluminum concentration to 11.9 weight-% Al in all experiments from EXP1-EXP8.

### Results

After the sodium aluminate solution had cooled down the amount of residual solid and X-ray diffraction (XRD) analyses of the residual solid were analyzed.

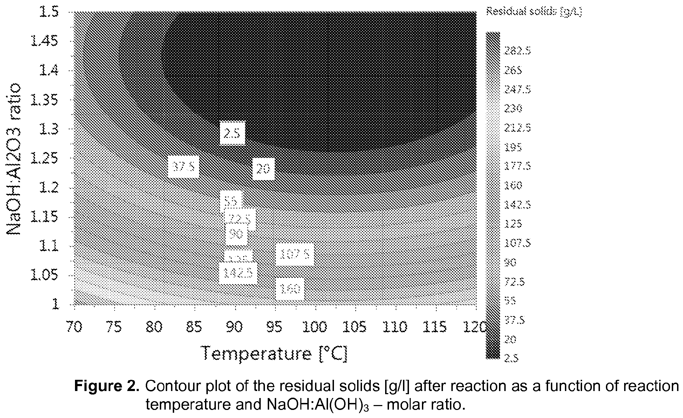

It was found out that if the NaOH:Al(OH)₃-molar ratio is lower than 1.25 the amount of unreacted residual solids increases significantly; molar ratio 1.25 yielded residual solids 3.2 g/L as a comparison to molar ratio 1.00 yielded residual solids 203.9 g/L, when the reaction temperature was 120°C. Results are shown in Figure 2, which is a contour plot of the residual solids [g/l] after reaction as a function of reaction temperature and NaOH:Al(OH)₃-molar ratio.

The residual solids from different experiments were analyzed with XRD. In all cases the residual solids was 100% Al(OH)₃, so there were not developing any insoluble reaction products during the sodium aluminate production, and the residual solids were truly unreacted Al(OH)₃.

**Table 3. Sulphate removal tests solids and XRD analyses result**

| | Na/Al-molar ratio | Reaction temperature [°C] | Residual solids [g/L] | XRD analyses of the residual solid |
|---|---|---|---|---|
| **EXP 1** | 1.500 | 120 | 5.5 | Al(OH)₃ |
| **EXP 2** | 1.500 | 70 | 36.7 | Al(OH)₃ |
| **EXP 3** | 1.250 | 120 | 3.2 | Al(OH)₃ |
| **EXP 4** | 1.250 | 95 | 2.2 | Al(OH)₃ |
| **EXP 5** | 1.250 | 70 | 91.2 | Al(OH)₃ |
| **EXP 6** | 1.000 | 120 | 203.9 | Al(OH)₃ |
| **EXP 7** | 1.000 | 70 | 260.4 | Al(OH)₃ |
| **EXP 8** | 1.375 | 107 | 4.2 | Al(OH)₃ |

It was found out that the most suitable reaction conditions are T>90°C, preferably T>95°C and NaOH:Al(OH)₃-molar ratio>1.2, preferably >1.25.

The stability of the sodium aluminate samples were followed for 7 days. It was found out that the sodium aluminate which is properly produced can be stored up to 7 days, if needed.

### Testing of developed sodium aluminates in Ettringite precipitation

Synthetic sulphate waste water was produced by neutralizing H₂SO₄ solution (6.17 ml 98% H₂SO₄ in 7 I water) with 60 ml of Ca(OH)₂-slurry (300 g/l). After neutralization the SO₄ concentration of the solution was analyzed (filtered with 0.45 µm filter). The sulphate concentration of the waste water was 1550 mg/l.

The ettringite precipitation was done by adding 9.25 ml of unfiltered sodium aluminate solution to the sulphate waste water. The sodium aluminate dosage was calculated so that the residual sulphate level would be 250 mg/l.

The reaction time was 30 min. After the reaction sample was taken and the residual sulphate was analyzed. The results are shown in the table 4. One can see that when the sodium aluminate is produced in the conditions where as little as possible residual Al(OH)₃ is remaining in the sodium aluminate solution (i.e higher concentration of soluble Al in the sodium aluminate) after the reaction it also performs better in the ettringite precipitation. One can also see that the unreacted Al(OH)₃ in the sodium aluminate solution doesn't react in the ettringite precipitation as one would have expected. On the other hand, any remaining minor residues of Al(OH)₃ doesn't interfere the ettringite precipitation meaning no filtration is needed.

**Table 4. Sulphate removal tests solids and XRD analyses result**

| | Na/Al-molar ratio | Reaction temperature | Targetted residual SO₄ (Needed sodium aluminate dosage was calculated based on this) | Measured residual SO₄ after Ettringite reaction [mg/L] |
|---|---|---|---|---|
| | | [°C] | [mg/L] | |
| **EXP 1** | 1.500 | 120 | 250 | 248 |
| **EXP 2** | 1.500 | 70 | 250 | 233 |
| **EXP 3** | 1.250 | 120 | 250 | 246 |
| **EXP 4** | 1.250 | 95 | 250 | 183 |
| **EXP 5** | 1.250 | 70 | 250 | 416 |
| **EXP 6** | 1.000 | 120 | 250 | 716 |
| **EXP 7** | 1.000 | 70 | 250 | 850 |
| **EXP 8** | 1.375 | 107 | 250 | 219 |

### Example: Sulphate removal from real industrial waste water

Analyzes of the original waste water is shown in the table 5 below. Sample is taken after the first neutralization process i.e. gypsum precipitation.

**Table 5. Analyzes of the waste water samples**

| | **ICP Na** | **ICP Mg** | **ICP Al** | **ICP Ca** | **IC SO4** |
|---|---|---|---|---|---|
| | **[mg/L]** | **[mg/L]** | **[mg/L]** | **[mg/L]** | **[mg/L]** |
| **Sample** | 24 | 3130 | <0,1 | 467 | 13470 |

Before the Ettringite precipitation process part of the sulphate is precipitated first as gypsum with CaO-slurry.

The gypsum precipitation was done with the CaO. After the gypsum precipitation adjustment the batch was filtered and the filtrate was then taken to Ettringite precipitation.

In the table 6 below is shown the analyzes of the initial waste water and the filtrate going to the Ettringite precipitation

**Table 6. Analyzes of the initial waste water and analyzes of the filtrate after the gypsum precipitation**

| | **ICP Na** | **ICP Mg** | **ICP Al** | **ICP Ca** | **IC SO₄** |
|---|---|---|---|---|---|
| | **[mg/L]** | **[mg/L]** | **[mg/L]** | **[mg/L]** | **[mg/L]** |
| **pH 7.5** | 23 | 3160 | <0,1 | 483 | 13470 |
| **pH 10.5** | 25 | 28 | <0.1 | 627 | 1727 |

### Ettringite precipitation

Ettringite precipitation experiments were done with three different Al chemicals: Al(OH)₃-slurry (200 g/l), Outotec's sodium aluminate and with commercial sodium aluminate. Three different dosages were used of each Al chemical.

First 3 l of the waste water from the gypsum precipitationwas measured and CaO needed for the Ettringite precipitation was added (27 ml of 200 g CaO/l slurry). The CaO-slurry and the waste water was mixed for 30 min before dosing of the aluminum chemical. The aluminum chemical was dosed and after that the mixing was continued for 30 min.

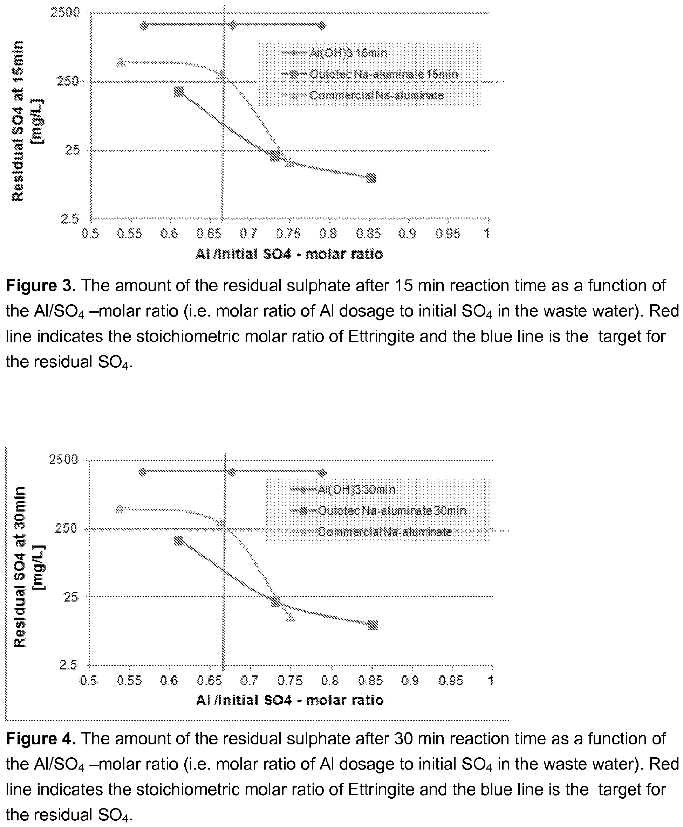

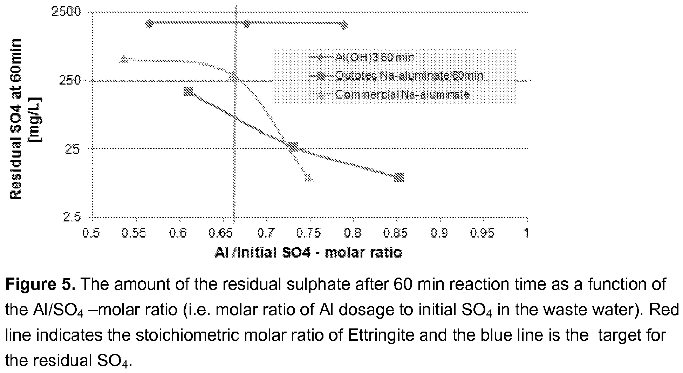

Results from the Ettringite precipitation experiments are shown in the figures 3-5. Target for the residual sulphate after Ettringite precipitation is 250 mg SO₄/l. One can see that 15 min, 30 min or the 60 min reaction time Al(OH)₃ has not removed any of the sulphates. With Al(OH)₃ much longer reaction time would have been needed.

Experiments made with two different sodium aluminates show that the Ettringite precipitation with sodium aluminate is very fast. The precipitation reaction is over in 15-30 min. Interesting finding was that the consumption of the Outotec's on-site sodium aluminate is smaller than with commercial sodium aluminate. Commercial sodium aluminate products are stabilized with for example organic acids (tartaric acid, gluconic acid etc.) to give them longer shelve life. If stabilizing agents are not used the Al(OH)₃ precipitates out of the sodium aluminate solution. It is clear that these stabilizing agents interfere the Ettringite precipitation and therefore higher dosage is needed in order to get the same effect as with non-stabilized Outotec's on-site sodium aluminate. From the results one can see that with the Outotec's on-site Na-aluminate the needed Al/SO₄ molar ratio (i.e. molar ratio of Al dosage to SO₄ in the waste water) would be 0.60 and with commercial Na-aluminate the needed ratio would be 0.66. This finding gives additional benefit to Outotec's on-site sodium aluminate production.

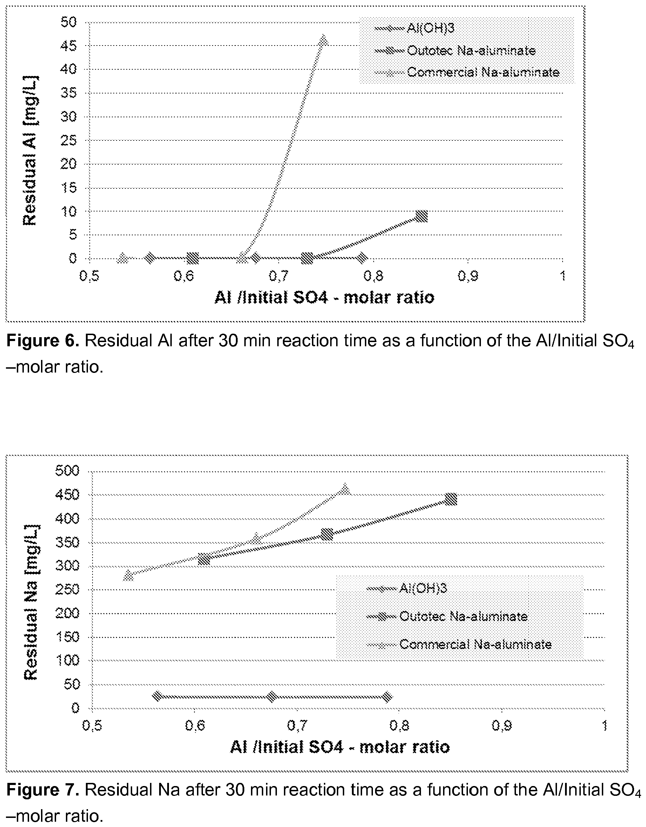

The residual Al and Na after the ettringite precipitation are shown in the figure 6 and 7. One can see that when the Outotec's on-site sodium aluminate is used the residual Al and Na (both related to the usage of the sodium aluminate) are smaller than in the case of the commercial sodium aluminate. This is due to fact that one needs to use Outotec's product less for the same level of SO₄ removal and since the Outotec's product doesn't contain any stabilizing agents the aluminum can be fully utilized. In the case of commercial sodium aluminate the stabilizing agents prevent part of the aluminum to precipitate as Ettringite and therefore some of the aluminum remains as soluble Al in the solution.

The analyses of the waste water at different treatment steps are shown in the table 7. One can see that Al/SO₄ molar ratio of 0.609 is more than enough to reach target level of residual SO₄ when Outotec's on-site sodium aluminate is used. With commercial sodium aluminate the ratio needs to be around 0.66 to reach target residual SO₄ level.

**Table 7. Analyzes of the initial waste water (pH7.5), after the gypsum precipitation (pH10.5) and after the Ettringite precipitation**

| | **ICP Na [mg/L]** | **ICP Mg [mg/L]** | **ICP Al [mg/L]** | **ICP S [mg/L]** | **ICP Ca [mg/L]** | **ICP Mn [mg/L]** | **ICP Fe [mg/L]** | **ICP Zn [mg/L]** | **ICP Cd [mg/L]** | **ICP Pb [mg/L]** | **IC SO4 [mg/L]** |
|---|---|---|---|---|---|---|---|---|---|---|---|
| **pH 7.5** | 23 | 3160 | <0,1 | 4490 | 483 | 9.67 | <0,1 | <0,1 | 0.19 | <0,1 | 13470 |
| **pH 10.5** | 25 | 28 | <0.1 | 585 | 627 | <0.1 | <0.1 | <0.1 | <0.1 | <0.1 | 1727 |
| **Outotec's Na-aluminate Al/SO4-molar ratio** = **0.609** | **316** | <0.1 | **<0.1** | 63 | 463 | <0.1 | <0.1 | <0.1 | <0.1 | <0.1 | **176** |
| **Commercial Na-aluminate Al/SO4-molar ratio = 0.641** | **358** | <0.1 | **0.28** | 111 | 393 | <0.1 | <0.1 | <0.1 | <0.1 | <0.1 | **308** |

Test work presented showed that the commercial Al(OH)₃ is not reactive enough with sulphate containing waste water and the 60min reaction time is not enough to get any effect from Al(OH)₃.

When Outotec's on-site sodium aluminate and commercial sodium aluminate were compared, it was concluded that Outotec's on-site sodium aluminate is more reactive in Ettringite precipitation. Most likely the stabilizing agents used in the commercial sodium aluminate products interfere the precipitation of Ettringite salt. With Outotec's sodium aluminate the Al/initial SO₄-molar ration needed for targeted 250 mg/l residual sulphate level was 0.6. With commercial Na-aluminate the molar ratio to reach the same residual sulphate level was roughly 0.66.

It was also noticed that with commercial sodium aluminate there remains some soluble aluminum in the treated water after the Ettringite precipitation. With Outotec's sodium aluminate the residual soluble aluminum was below ICP detection limit (<0.1 mg/). Same thing could be seen in residual sodium content; with Outotec's sodium aluminate the residual sodium was smaller than when commercial sodium aluminate was used.

It will be obvious to a person skilled in the art that, as the technology advances, the inventive concept can be implemented in various ways. The invention and its embodiments are not limited to the examples described above but may vary within the scope of the claims.

## Claims

1. A method of removing sulphate, calcium and other soluble metals from sulphate-containing waste water, comprising
a) an on-site sodium aluminate preparation step, wherein NaOH and Al(OH)₃ are contacted at a temperature of 90°C-180°C and the molar ratio NaOH:Al(OH)₃ 1.2-2.0, for preparing sodium aluminate,
b) an ettringite precipitation step, wherein the waste water is contacted with the on-site obtained sodium aluminate and a first calcium compound within 7 days of preparation of the on-site obtained sodium aluminate for producing a sludge containing ettringite,
c) a first separation step, wherein a solid-liquid separation is performed for the sludge containing ettringite for separating solids from the liquid thereby producing a first solution,
d) a neutralisation step, wherein the first solution is contacted with a carbonating agent for neutralising the first solution and precipitating calcium contained in the first solution as calcium carbonate, and
e) a second separation step wherein a solid-liquid separation is performed for separating precipitated calcium carbonate from the first solution in order to obtain water having a reduced sulphate, calcium and other soluble metals content.

2. The method according to claim 1, wherein the temperature in the sodium aluminate preparation step is maintained in at least 95°C and /or wherein the molar ratio of NaOH:Al(OH)₃ is maintained in a value of at least 1.25.

3. The method according to any one of the preceding claims, wherein the temperature in the sodium aluminate preparation step is maintained in the range of 90-105°C, more typically 95-105°C and/or wherein in the sodium aluminate preparation step the molar ratio of NaOH:Al(OH)₃ is in the range of 1.2-1.5, more typically 1.2-1.4, yet more typically 1.25-1.4.

4. The method according to any one of the preceding claims, wherein the waste water is process water, effluent or sulphate-containing water, such as mine water, recycle water from concentrator or discharge water from concentrator.

5. The method according to any one of the preceding claims, wherein the method comprises a gypsum precipitation step a') before the ettringite precipitation step b) in which gypsum precipitation step a') the water to be treated is contacted with a second calcium compound for precipitating gypsum and optionally wherein the gypsum precipitation step a') is followed by a gypsum removal step a"), wherein a solid-liquid separation is performed for removing precipitated gypsum from the formed gypsum sludge.

6. The method according to any one of the preceding claims wherein the first calcium compound and the second calcium compound are selected independently from the group consisting of calcium hydroxide, calcium oxide, calcium carbonate and a mixture thereof.

7. The method according to any one of the preceding claims, wherein the retention time in the ettringite precipitation step is from 10 to 60 minutes, typically from 15 to 30 minutes.

8. The method according to any one of the preceding claims, wherein in the ettringite precipitation step the molar ratio of Al³⁺/SO₄²⁻ is approximately from 2:3 to 1:1.

9. The method according to any one of the preceding claims, wherein the solid-liquid separation is performed by settling, filtering, clarification, decanting, by using hydrocyclone and/or by using Dissolved Air Flotation.

10. The method according to any one of the preceding claims, wherein the solids separated in the first separation step comprise ettringite and optionally gypsum, calcium carbonate, metal hydroxides and other inert components present in the feed materials to the method.

11. The method according to any one of the preceding claims, wherein part of or all of the solids separated in the first separation step are recycled back to the gypsum precipitation step and/or to the ettringite precipitation step.

12. The method according to any one of the preceding claims, wherein in the neutralisation step the carbonating agent is selected from the group consisting of CO₂, sodium bicarbonate and sodium carbonate.

13. The method according to any one of the preceding claims, wherein in the neutralisation step the first solution is contacted with an alkaline, such as sodium hydroxide, for increasing the precipitation of calcium.

## Patentansprüche

1. Verfahren zum Entfernen von Sulfat, Calcium und anderen löslichen Metallen aus sulfathaltigem Abwasser, umfassend
a) einen Vor-Ort-Natriumaluminatherstellungsschritt, worin NaOH und Al(OH)₃ bei einer Temperatur von 90 °C - 180 °C und dem Molverhältnis NaOH:Al(OH)₃ von 1,2 - 2,0 in Kontakt gebracht werden, um Natriumaluminat herzustellen,
b) einen Ettringitausfällungsschritt, worin das Abwasser mit dem vor Ort erhaltenen Natriumaluminat und einer ersten Calciumverbindung innerhalb von 7 Tagen der Herstellung des vor Ort erhaltenen Natriumaluminats in Kontakt gebracht wird, um einen Ettringit enthaltenden Schlamm zu produzieren,
c) einen ersten Trennungsschritt, worin eine Fest-Flüssig-Trennung für den Schlamm, der Ettringit enthält, durchgeführt wird, um Feststoffe von der Flüssigkeit abzutrennen, wodurch eine erste Lösung produziert wird,
d) einen Neutralisationsschritt, worin die erste Lösung mit einem in ein Carbonat umwandelnden Mittel in Kontakt gebracht wird, um die erste Lösung zu neutralisieren und in der ersten Lösung enthaltenes Calcium als Calciumcarbonat auszufällen, und
e) einen zweiten Trennungsschritt, worin eine Fest-Flüssig-Trennung durchgeführt wird, um ausgefälltes Calciumcarbonat von der ersten Lösung abzutrennen, um Wasser mit einem verringerten Gehalt an Sulfat, Calcium und anderen löslichen Metallen zu erhalten.

2. Verfahren gemäß Anspruch 1, worin die Temperatur in dem Natriumaluminatherstellungsschritt bei wenigstens 95 °C gehalten wird und/oder worin das Molverhältnis von NaOH:Al(OH)₃ auf einem Wert von wenigstens 1,25 gehalten wird.

3. Verfahren gemäß einem der vorangehenden Ansprüche, worin die Temperatur in dem Natriumaluminatherstellungsschritt in dem Bereich von 90- 105 °C, stärker bevorzugt 95 - 105 °C gehalten wird und/oder worin in dem Natriumaluminatherstellungsschritt das Molverhältnis von NaOH:Al(OH)₃ in dem Bereich von 1,2 - 1,5, stärker bevorzugt 1,2 - 1,4, noch stärker bevorzugt 1,25 - 1,4 liegt.

4. Verfahren gemäß einem der vorangehenden Ansprüche, worin das Abwasser Prozesswasser, Ausfluss oder sulfathaltiges Wasser wie etwa Grubenwasser, rückgeführtes Wasser von einem Konzentrationsapparat oder Abflusswasser von einem Konzentrationsapparat ist.

5. Verfahren gemäß einem der vorangehenden Ansprüche, wobei das Verfahren einen Gipsausfällungsschritt a') vor dem Ettringitausfällungsschritt b) umfasst, wobei in diesem Gipsausfällungsschritt a') das zu behandelnde Wasser mit einer zweiten Calciumverbindung zum Ausfällen von Gips in Kontakt gebracht wird und wobei gegebenenfalls auf den Gipsausfällungsschritt a') ein Gipsentfernungsschritt a") folgt, worin eine Fest-Flüssig-Trennung durchgeführt wird, um ausgefällten Gips aus dem gebildeten Gipsschlamm zu entfernen.

6. Verfahren gemäß einem der vorangehenden Ansprüche, worin die erste Calciumverbindung und die zweite Calciumverbindung unabhängig ausgewählt sind aus der Gruppe bestehend aus Calciumhydroxid, Calciumoxid, Calciumcarbonat und einer Mischung davon.

7. Verfahren gemäß einem der vorangehenden Ansprüche, worin die Retentionszeit in dem Ettringitausfällungsschritt 10 bis 60 Minuten, vorzugsweise 15 bis 30 Minuten beträgt.

8. Verfahren gemäß einem der vorangehenden Ansprüche, worin in dem Ettringitausfällungsschritt das Molverhältnis von Al³⁺/SO₄²⁻ ungefähr 2:3 bis 1:1 beträgt.

9. Verfahren gemäß einem der vorangehenden Ansprüche, worin die Fest-Flüssig-Trennung durch Absetzen, Filtern, Klärung, Dekantieren, durch Verwenden eines Hydrozyklons und/oder durch Verwenden einer Entspannungsflotation durchgeführt wird.

10. Verfahren gemäß einem der vorangehenden Ansprüche, worin die in dem ersten Abtrennungsschritt abgetrennten Feststoffe Ettringit und gegebenenfalls Gips, Calciumcarbonat, Metallhydroxide und andere inerte Komponenten umfassen, die in den dem Verfahren zugeführten Einsatzmaterialien vorhanden sind.

11. Verfahren gemäß einem der vorangehenden Ansprüche, worin ein Teil von oder alle von den in dem ersten Abtrennungsschritt abgetrennten Feststoffen zu dem Gipsausfällungsschritt und/oder zu dem Ettringitausfällungsschritt zurückgeführt werden.

12. Verfahren gemäß einem der vorangehenden Ansprüche, worin in dem Neutralisationsschritt das in ein Carbonat umwandelnde Mittel ausgewählt ist aus der Gruppe bestehend aus CO₂, Natriumhydrogencarbonat und Natriumcarbonat.

13. Verfahren gemäß einem der vorangehenden Ansprüche, worin in dem Neutralisationsschritt die erste Lösung mit einem Alkali, wie etwa Natriumhydroxid, in Kontakt gebracht wird, um die Ausfällung von Calcium zu steigern.

## Revendications

1. Procédé d'élimination de sulfate, de calcium et d'autres métaux solubles, présents dans des eaux usées contenant du sulfate, comprenant
a) une étape de préparation d'aluminate de sodium sur site, dans laquelle NaOH and Al(OH)₃ sont mis en contact à une température de 90 °C-180 °C et dans un rapport molaire NaOH:Al(OH)₃ de 1,2-2,0, pour préparer de l'aluminate de sodium,
b) une étape de précipitation d'ettringite, dans laquelle les eaux usées sont mises en contact avec l'aluminate de sodium obtenu sur site et un premier composé de calcium dans les 7 jours suivant la préparation de l'aluminate de sodium obtenu sur site, pour produire une boue contenant de l'ettringite,
c) une première étape de séparation, dans laquelle une séparation solide-liquide est effectuée sur la boue contenant de l'ettringite, pour séparer les solides d'avec le liquide, produisant ainsi une première solution,
d) une étape de neutralisation, dans laquelle la première solution est mise en contact avec un agent carbonatant, pour neutraliser la première solution et faire précipiter le calcium contenu dans la première solution sous forme de carbonate de calcium, et
e) une seconde étape de séparation dans laquelle une séparation solide-liquide est effectuée pour séparer le carbonate de calcium précipité d'avec la première solution afin d'obtenir de l'eau ayant une teneur réduite en sulfate, calcium et autres métaux solubles.

2. Procédé selon la revendication 1, dans lequel la température dans l'étape de préparation d'aluminate de sodium est maintenue à au moins 95 °C et/ou dans lequel le rapport molaire de NaOH:Al(OH)₃ est maintenu à une valeur d'au moins 1,25.

3. Procédé selon l'une quelconque des revendications précédentes, dans lequel la température dans l'étape de préparation d'aluminate de sodium est maintenue dans l'intervalle de 90-105 °C, plus typiquement 95-105 °C et/ou dans lequel dans l'étape de préparation d'aluminate de sodium le rapport molaire de NaOH:Al(OH)₃ est compris dans l'intervalle de 1,2-1,5, plus typiquement 1,2-1,4, encore plus typiquement 1,25-1,4.

4. Procédé selon l'une quelconque des revendications précédentes, dans lequel les eaux usées sont des eaux de traitement, des effluents aqueux ou des eaux contenant du sulfate, telles que les eaux de mine, les eaux recyclées provenant de concentrateur ou les eaux d'évacuation provenant de concentrateur.

5. Procédé selon l'une quelconque des revendications précédentes, lequel procédé comprend une étape de précipitation de gypse a') avant l'étape de précipitation d'ettringite b) où dans l'étape de précipitation de gypse a') l'eau à traiter est mise en contact avec un second composé de calcium pour faire précipiter le gypse et où éventuellement l'étape de précipitation de gypse a') est suivie par une étape d'élimination de gypse a"), dans laquelle une séparation solide-liquide est effectuée pour éliminer le gypse précipité de la boue de gypse formée.

6. Procédé selon l'une quelconque des revendications précédentes, dans lequel le premier composé de calcium et le second composé de calcium sont indépendamment choisis dans le groupe consistant en hydroxyde de calcium, oxyde de calcium, carbonate de calcium et un mélange de ceux-ci.

7. Procédé selon l'une quelconque des revendications précédentes, dans lequel le temps de rétention dans l'étape de précipitation d'ettringite est de 10 à 60 minutes, typiquement de 15 à 30 minutes.

8. Procédé selon l'une quelconque des revendications précédentes, dans lequel dans l'étape de précipitation d'ettringite le rapport molaire d'Al³⁺/SO₄²⁻ est approximativement compris entre 2:3 et 1:1.

9. Procédé selon l'une quelconque des revendications précédentes, dans lequel la séparation solide-liquide est effectuée par sédimentation, filtration, clarification, décantation, utilisation d'hydrocyclone et/ou utilisation de la flottation par air dissous.

10. Procédé selon l'une quelconque des revendications précédentes, dans lequel les solides séparés dans la première étape de séparation comprennent de l'ettringite et éventuellement du gypse, du carbonate de calcium, des hydroxydes métalliques et d'autres composants inertes présents dans les matières premières employées dans le procédé.

11. Procédé selon l'une quelconque des revendications précédentes, dans lequel une partie ou la totalité des solides séparés dans la première étape de séparation sont recyclés dans l'étape de précipitation de gypse et/ou dans l'étape de précipitation d'ettringite.

12. Procédé selon l'une quelconque des revendications précédentes, dans lequel dans l'étape de neutralisation l'agent carbonatant est choisi dans le groupe consistant en CO₂, bicarbonate de sodium et carbonate de sodium.

13. Procédé selon l'une quelconque des revendications précédentes, dans lequel dans l'étape de neutralisation la première solution est mise en contact avec un agent alcalin, tel que l'hydroxyde de sodium, pour augmenter la précipitation du calcium.
